# EUROPEAN PATENT SPECIFICATION

(11) **EP 2 540 525 B1**
(45) Date of publication and mention of the grant of the patent: **26.12.2018**
(21) Application number: 11744551.0
(22) Date of filing: 08.02.2011
(51) Int. Cl.: B60C 11/13, B60C 11/03

(54) **TIRE**
REIFEN
PNEU

(30) Priority: 22.02.2010 JP 2010036163
(43) Date of publication of application: 02.01.2013
(73) Proprietor: Bridgestone Corporation, Tokyo 104-8340 (JP)
(72) Inventor: TAKAHASHI, Junichi, Tokyo 187-8531 (JP); OCHI, Naoya, Tokyo 187-8531 (JP)
(74) Representative: Oxley, Robin John George
(86) International application number: PCT/JP2011/052647
(87) International publication number: WO 2011/102264

(56) References cited:
- EP-A1- 0 454 394
- EP-A1- 2 261 064
- WO-A1-2007/072717
- JP-A- 3 092 402
- JP-A- 61 175 104
- JP-A- 63 106 113
- JP-A- S61 175 104
- JP-A- 2000 016 024
- US-A- 2 459 762
- US-A- 5 373 881

## Description

### TECHNICAL FIELD

The present invention relates to a tire provided with land portions formed by main grooves extending along the tire circumferential direction.

### BACKGROUND ART

Conventionally, in pneumatic tires (hereinafter, referred to as tires) mounted on vehicles such as trucks or buses, a tread pattern, in which main grooves formed in a zigzag shape with respect to the tire circumferential direction are provided, has been widely used in order to improve traction performance on a snow-covered road surface.

In such zigzag-shaped main grooves, since stress is easily concentrated on tips projected into the main grooves at the time of driving of the vehicle, uneven wear may easily occur. On the other hand, there has been known a tire in which land portions segmented by the zigzag-shaped main grooves are formed with sub-grooves that extend along the tire circumferential direction and are finer than the main grooves (refer to Patent Literature 1). According to the tire, it is possible to prevent the progress of uneven wear by the sub-grooves, and to improve traction performance while maximally suppressing the reduction of uneven wear resistance performance.

Furthermore, there has been known a pneumatic tire that prevents uneven wear by allowing a zigzag pattern formed on one wall surface constituting zigzag-shaped grooves to differ from a zigzag pattern formed on the other wall surface (refer to Patent Literature 2). Attention is drawn to the disclosures of US 2,459,762, JPS 61-175104, US 5,373,881, EP 2,261,064 and EP 0,454,394. EP 0,454,394 does not disclose the characterizing features of claim 1.

### PRIOR ART DOCUMENT

### PATENT DOCUMENT

Patent Document 1: Japanese Patent Application Publication No. S61-146606 (Fig 1 and Fig. 2)
Patent Document 2: Japanese Patent Application Publication No. H06-286421 (Fig. 1)

### SUMMARY OF THE INVENTION

### PROBLEM TO BE SOLVED BY THE INVENTION

However, in the conventional tire, it is possible to improve uneven wear resistance performance, but a refraction angle of the main groove becomes small and thus an edge component is reduced, resulting in a reduction of traction performance. As described above, since the traction performance is inconsistent with the uneven wear resistance performance, a high-level coexistence of the both is difficult. Furthermore, in the conventional tire, since the uneven wear resistance performance has not been reliably improved, there is a room for improvement.

Therefore, an object of the present invention is to provide a tire capable of allowing traction performance and uneven wear resistance performance to be compatible with each other at a high level when zigzag-shaped main grooves are formed.

### MEANS FOR SOLVING THE PROBLEM

To solve the above problem, the present invention has following features. A first feature of the present invention is summarized as a tire comprising: a plurality of main grooves (center main groove 10 and outer main groove 20) which extend in a tire circumferential direction; and land portions (center land portion 30 and outer land portion 40) which are segmented by the main grooves, wherein an outermost main groove (outer main groove 20) formed at an outermost side in a tire width direction among the plurality of main grooves includes a first groove wall inward in the tire width direction; and a second groove wall outward in the tire width direction, the outermost main groove has a wedge-shaped part in which an interval between the first groove wall and the second groove wall is reduced toward one side of the tire circumferential direction, the wedge-shaped part being repeated in the tire circumferential direction, the first groove wall (inner wall surface 32) has a plurality of first projections (outer projection 33) with apexes that project outward in the tire width direction, along the tire circumferential direction, the second groove wall (outer wall surface 41) has a plurality of second projections (inner projection 43) with apexes that project inward in the tire width direction, along the tire circumferential direction, and an interval between the apexes of the first projections adjacent to each other in the tire circumferential direction is larger than an interval between the apexes of the second projections adjacent to each other in the tire circumferential direction.

In the feature of the present invention, the interval between the apexes of the first projections adjacent to each other in the tire circumferential direction may be constant, and the interval between the apexes of the second projections adjacent to each other in the tire circumferential direction may be constant.

In the feature of the present invention, a virtual line, which connects the apex of a first projection to the apex of a second projection facing the apex of the first projection, may coincide with a tire width direction line perpendicular to a tire equator line.

In the feature of the present invention, a tire-width-direction length to the apex of a first projection from a virtual line, which is defined along the tire circumferential direction at a position coinciding with the first groove wall at which a groove width in the tire width direction of the outermost main groove is widest, may be shorter than a tire-width-direction length to the apex of a second projection from a virtual line which is defined along the tire circumferential direction at a position coinciding with the second groove wall at which a groove width in the tire width direction of the outermost main groove is widest.

In the feature of the present invention, the first projections have first inclined wall surfaces and first connection wall surfaces and are formed that the first inclined wall surfaces and the first connection wall surfaces are alternately continued in the tire circumferential direction, the first inclined wall surfaces are provided along the tire circumferential direction at a regular interval and inclined with respect to the tire circumferential direction, each first connection wall surface connects end portions of the first inclined wall surfaces adjacent to each other in the tire circumferential direction, the second projections have second inclined wall surfaces and second connection wall surfaces and are formed that the second inclined wall surfaces and the second connection wall surfaces are alternately continued in the tire circumferential direction, the second inclined wall surfaces are provided along the tire circumferential direction at a regular interval and inclined with respect to a virtual line along the tire circumferential direction, and each second connection wall surface connects end portions of the second inclined wall surfaces adjacent to each other in the tire circumferential direction, and wherein a length in the tire circumferential direction of each first inclined wall surface is longer than a length in the tire circumferential direction of each first connection wall surface, and a length in the tire circumferential direction of each second inclined wall surface is longer than a length in the tire circumferential direction of each second connection wall surface.

In the feature of the present invention, a groove width of the outermost main groove may be reduced toward inside in a tire radial direction.

In the feature of the present invention, a center main groove formed in an area including the tire equator line may have an amplitude in the tire width direction while extending in the tire circumferential direction.

### EFFECT OF THE INVENTION

According to the present invention, it is possible to provide a tire capable of allowing traction performance and uneven wear resistance performance to be compatible with each other at a high level when zigzag-shaped main grooves are formed.

### BRIEF DESCRIPTION OF THE DRAWINGS

[Fig. 1] Fig. 1 is a development view illustrating a tread pattern of a pneumatic tire 1 according to the present embodiment.
[Fig. 2] Fig. 2 is a perspective view illustrating a part of the tread pattern of the pneumatic tire 1 according to the present
   embodiment.
[Fig. 3] Fig. 3 is an enlarged view of an outer main groove 20 of the pneumatic tire 1 according to the present embodiment.
[Fig. 4] Fig. 4 is a cross-sectional view in the tire width direction of a part of the tread pattern of the pneumatic tire 1 according to the present embodiment.
[Fig. 5] Fig. 5 is an enlarged view of an outer main groove 20 of a pneumatic tire 1' according to the present embodiment.
[Fig. 6] Fig. 6 is a development view illustrating a tread pattern of a pneumatic tire 1A according to a modification.
[Fig. 7] Fig. 7 is a development view illustrating a tread pattern of a pneumatic tire 1B according to a modification.
[Fig. 8] Fig. 8 is a development view illustrating a tread pattern of a pneumatic tire 2 according to a modification.
[Fig. 9] Fig. 9 is an enlarged view of an outer main groove 120 of the pneumatic tire 2.
[Fig. 10] Fig. 10 is a cross-sectional view in the tire width direction of the outer main groove 120 of the pneumatic tire 2.
[Fig. 11] Fig. 11 is a cross-sectional view in the tire width direction of a lug groove 150 of the pneumatic tire 2.
[Fig. 12] Fig. 12 is a development view illustrating a tread pattern of a pneumatic tire of a first comparative example.
[Fig. 13] Fig. 13 is a development view illustrating a tread pattern of a pneumatic tire of a second comparative example.
[Fig. 14] Fig. 14 is a development view illustrating a tread pattern of a pneumatic tire of a third comparative example.
[Fig. 15] Fig. 15 is a development view illustrating a tread pattern of a pneumatic tire of a first example.

### MODES FOR CARRYING OUT THE INVENTION

Next, an embodiment of a pneumatic tire according to the present invention is explained with reference to drawings. Specifically, (1) Configuration of Pneumatic Tire, (2) Configuration of land portion, (3) Configuration of Main Groove, (4) Operation and Effect, (5) Modifications, (6) Comparative Evaluations, and (7) Other Embodiments will be described.

In the following description of the drawings, the same or similar reference numerals are used to designate the same or similar parts. However, it should be noted that the drawings are schematic and ratios of respective dimensions and the like are different from actual ones.

Therefore, a specific dimension should be determined in view of the following description. Moreover, among the drawings, the respective dimensional relations or ratios may differ.

### (1) Configuration of Pneumatic Tire

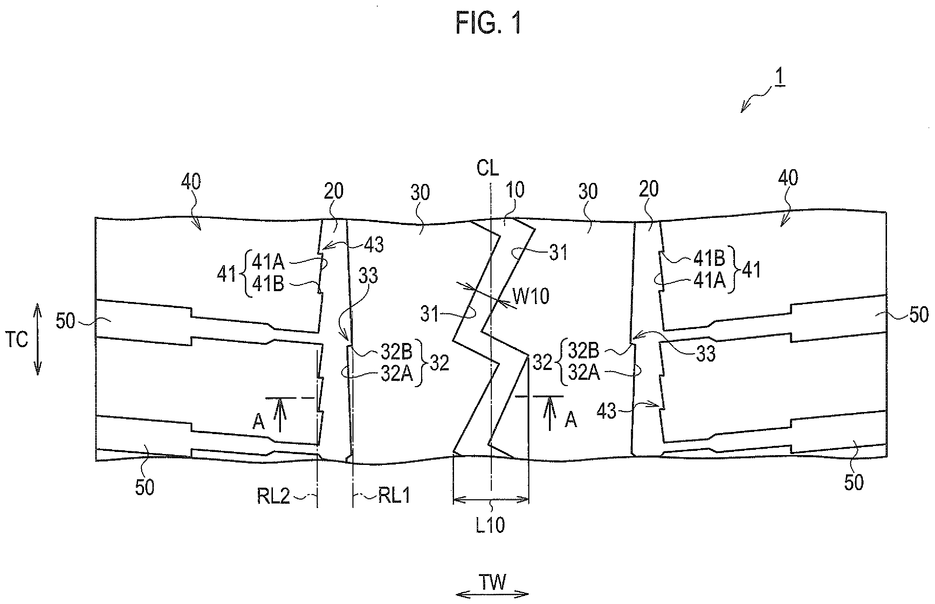

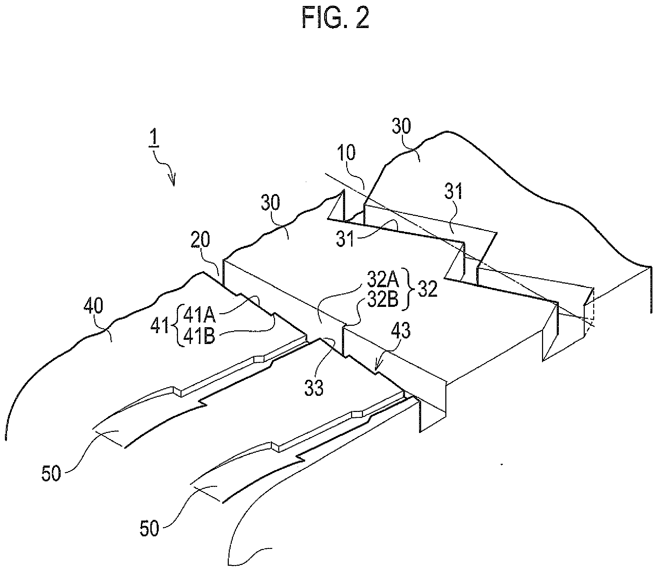

First, the configuration of a pneumatic tire 1 according to the present embodiment will be explained with reference to drawings. Fig. 1 is a development view illustrating a tread pattern of the pneumatic tire 1 according to the present embodiment. Fig. 2 is a perspective view illustrating a part of the tread pattern of the pneumatic tire 1 according to the present embodiment.

As illustrated in Fig. 1 and Fig. 2, the pneumatic tire 1 is provided with a plurality of main grooves extending along the tire circumferential direction (direction TC), and land portions formed by the main grooves. The pneumatic tire 1 is provided with the land portions formed by the main grooves extending along the tire circumferential direction (direction TC). Specifically, the main groove includes a center main groove 10 formed in an area including a tire equator line CL in the tire width direction of the pneumatic tire 1, and outer main grooves 20 formed outward in the tire width direction more than the center main groove 10. The outer main grooves 20 of the pneumatic tire 1 are formed to be line-symmetrical to each other with respect to the tire equator line CL. In the embodiment, the outer main grooves 20 configure the outermost main groove formed at the outermost side in the tire width direction.

### (2) Configuration of land portion

The land portion includes a pair of center land portions 30 and a pair of outer land portions 40. Each center land portion 30 is formed between the center main groove 10 and the outer main groove 20. Each center land portion 30 is formed in a rib shape continuous in the tire circumferential direction. Each outer land portion 40 is formed outward in the tire width direction more than the outer main groove 20.

### (2. 1) Configuration of Center land portion

The land portion has the center land portion 30 positioned at the side of the tire equator line CL in the tire width direction, and the outer land portion 40 positioned outward in the tire width direction more than the center land portion 30.

Each center land portion 30 is provided with an inner wall surface 31 and an outer wall surface 32. The inner wall surface 31 is positioned at the side of the tire equator line CL (that is, inward in the tire width direction). The inner wall surface 31 forms the center main groove 10. Meanwhile, the outer wall surface 32 is positioned outward in the tire width direction more than the inner wall surface 31. The outer wall surface 32 of the center land portion 30 configures one groove wall of the outer main groove 20 adjacent to the outside of the tire width direction. In addition, the center land portion 30 configures a first land portion having a first groove wall (the outer wall surface 32) positioned at the side of the tire equator line CL of the outer main groove 20.

The outer wall surface 32 is formed in a zigzag shape with respect to the tire circumferential direction. The outer wall surface 32 has an outward projection 33 that projects outward in the tire width direction. The outward projection 33 is formed in a plural number at predetermined intervals along the tire circumferential direction. The outward projection 33 has an approximately triangular shape in view of a tread surface.

Specifically, the outer wall surface 32 (the outward projection 33) is formed by allowing long wall surfaces 32A extending in the tire circumferential direction and short wall surfaces 32B having lengths in the tire circumferential direction shorter than those of the long wall surfaces 32A to alternately continue in the tire circumferential direction. The long wall surfaces 32A extend along the tire circumferential direction and are provided along the tire circumferential direction at predetermined intervals. The long wall surfaces 32A are inclined with respect to a virtual line RL1 along the tire circumferential direction. Meanwhile, the short wall surfaces 32B extend along the tire width direction. Each short wall surface 32B connects end portions of the long wall surfaces 32A adjacent to each other in the tire circumferential direction to each other. Each short wall surface 32B is shorter than the long wall surface 32A in view of the tread surface.

In addition, the outward projection 33 configures a first projection, the long wall surface 32A configures a first inclined wall surface, and the short wall surface 32B configures a first connection wall surface.

### (2. 2) Configuration of Outer land portion

Each outer land portion 40 is positioned outward in the tire width direction more than the outer main groove 20. Each outer land portion 40 is formed with lug grooves 50 opened to the outer main groove 20 while extending along the tire width direction. The outer land portions 40 are formed in a block shape and are arranged along the tire circumferential direction at predetermined intervals.

Each outer land portion 40 is provided with at least an inner wall surface 41 inward in the tire width direction. The inner wall surface 41 faces the outer wall surface 32 of the center land portion 30. The inner wall surface 41 of the outer land portion 40 configures the other groove wall which faces the outer wall surface 32 constituting one groove wall of the outer main groove 20 adjacent to the inside in the tire width direction. A negative ratio (a ratio of grooves with respect to the land portion) of the outer land portion 40 is larger than a negative ratio of the center land portion 30. In addition, the outer land portion 40 configures a second land portion having a second groove wall (the inner wall surface 41) positioned outward in the tire width direction of the outer main groove 20.

The inner wall surface 41 is formed in a zigzag shape with respect to the tire circumferential direction. The inner wall surface 41 forms an inward projection 43 that projects inward in the tire width direction. The inward projection 43 is formed in a plural number at predetermined intervals along the tire circumferential direction. The inward projection 43 has an approximately triangular shape in view of a tread surface.

Specifically, the inner wall surface 41 (the inward projection 43) is formed by allowing long wall surfaces 41A extending in the tire circumferential direction and short wall surfaces 41B having lengths in the tire circumferential direction shorter than those of the long wall surfaces 41A to alternately continue in the tire circumferential direction. The long wall surfaces 41A extend along the tire circumferential direction and are provided along the tire circumferential direction at predetermined intervals. The long wall surfaces 41A are inclined with respect to a virtual line RL2 along the tire circumferential direction. Meanwhile, the short wall surfaces 41B extend along the tire width direction. Each short wall surface 41B connects end portions of the long wall surfaces 41A adjacent to each other in the tire circumferential direction to each other. Each short wall surface 41B is shorter than the long wall surface 41A in view of the tread surface.

In addition, the inward projection 43 configures a second projection, the long wall surface 41A configures a second inclined wall surface, and the short wall surface 41B configures a second connection wall surface.

### (3) Configuration of Main Groove

### (3. 1) Configuration of Center Main Groove

The center main groove 10 is formed in an area including the tire equator line CL, and has an amplitude in the tire width direction while extending in the tire circumferential direction. In the embodiment, the center main groove 10 is formed in a zigzag shape with respect to the tire circumferential direction.

### (3. 2) Configuration of Outer Main Groove

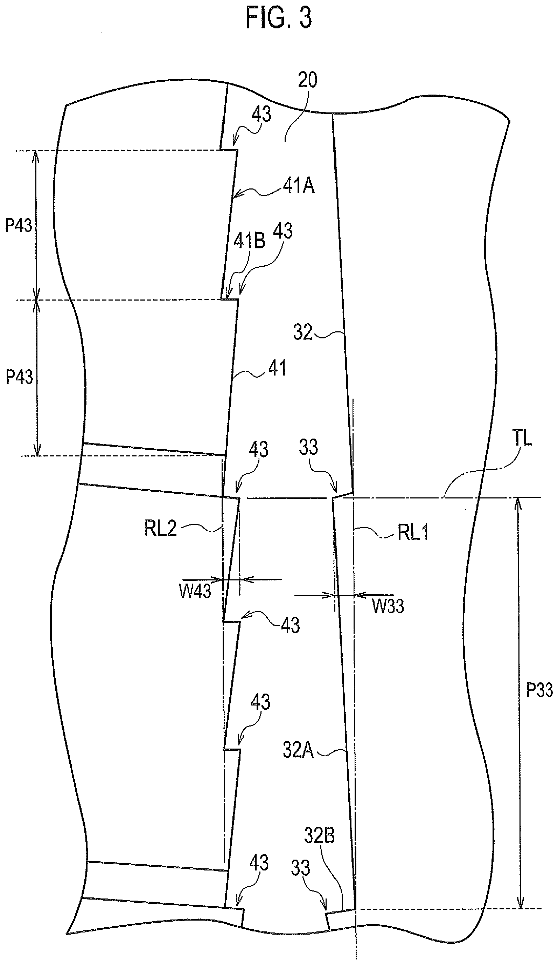

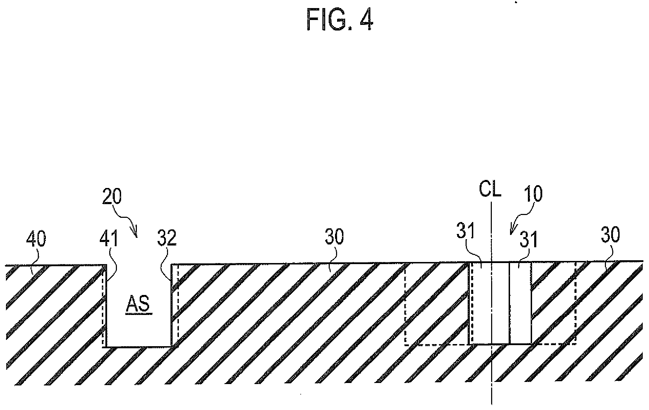

Fig. 3 is an enlarged view of the outer main groove 20 of the pneumatic tire 1. Fig. 4 is a cross-sectional view in the tire width direction of a part of the tread pattern of the pneumatic tire 1 according to the present embodiment.

The outer main groove 20 is configured by the outer wall surface 32 of the center land portion 30 and the inner wall surface 41 of the outer land portion 40. In the embodiment, a part of the outer main groove 20 has the long wall surface 32A inclined with respect to the virtual line RL1 along the tire circumferential direction and the long wall surface 41A inclined with respect to the virtual line RL2 along the tire circumferential direction. That is, a groove width in the tire width direction of the outer main groove 20 changes in the tire circumferential direction. A part of the outer main groove 20 has a wedge shape in which a groove width is reduced toward one side of the tire circumferential direction, wherein the part having the wedge shape is repeated in the tire circumferential direction.

The inward projection 43 formed on the inner wall surface 41 and the outward projection 33 formed on the outer wall surface 32 are formed at positions in which they face each other in the tire circumferential direction. A virtual line connecting an apex of the inward projection 43 to an apex of the outward projection 33 coincides with a tire width direction line TL parallel to the tire width direction while being perpendicular to the tire equator line.

Furthermore, an interval (a pitch) P33 between apexes of the outward projections 33 adjacent to each other in the tire circumferential direction is larger than an interval (a pitch) P43 between apexes of the inward projections 43 adjacent to each other in the tire circumferential direction. Furthermore, a maximum width W33 of the outward projection 33 along the tire width direction is equal to a maximum width W43 of the inward projection 43 along the tire width direction.

An amplitude of the outer wall surface 32 formed in a zigzag shape through the formation of the outward projection 33 is larger than an amplitude of the inner wall surface 41 formed in a zigzag shape through the formation of the inward projection 43.

Here, the apex of the outward projection 33 indicates a part, at which the length from the virtual line RL1 of the outward projection 33 projecting toward the outside of the tire width direction is maximum, when setting the virtual line RL1 along the tire circumferential direction defined at a position, at which the groove width of the outer main groove 20 is widest, in a tread plan view. Furthermore, the maximum width W33 of the outward projection 33 indicates a maximum value of the length from the virtual line RL1 of the outward projection 33. The apex of the inward projection 43 is also defined in the same manner.

That is, the apex of the inward projection 43 indicates a part at which the length of the inward projection 43 from the virtual line RL2 is maximum along the tire circumferential direction defined at a position at which the groove width of the outer main groove 20 is widest, and the maximum width W43 of the inward projection 43 indicates a maximum value of the length from the virtual line RL2 of the inward projection 43.

As illustrated in Fig. 4, the center main groove 10 is formed to prevent see-through from an arbitrary end to the other end when developing the tread over the tire circumferential direction. That is, an amplitude L10 of the tire width direction (direction TW) of the center main groove 10 is larger than a width W10 perpendicular to an extension direction of the center main groove 10. As illustrated in Fig. 4, the outer main groove 20 is formed to permit see-through from an arbitrary end from the other end when developing the tread over the tire circumferential direction. The outer main groove 20 is formed with a space unit AS.

### (4) Operation and Effect

Since tires mounted on vehicles such as trucks or buses receive high internal pressure (for example, 400 kPa to 500 kPa) and high load (200 kg/piece to 600 kg/piece), high ground contact pressure is applied even to the outside in the tire width direction on the ground contact surfaces of the tires.

On the other hand, in accordance with the pneumatic tire 1 according to the embodiment, the outer main groove 20 formed outward in the tire width direction has a shape in which the wedge-shaped part is repeated in the tire circumferential direction, wherein in the wedge-shaped part, the width in the tire width direction of the outer main groove 20 is reduced toward one side of the tire circumferential direction. In this way, it is possible to exhibit a shearing effect of snow, in the main grooves extending in the tire circumferential direction at the outside in the tire width direction to which the high ground contact pressure is applied.

Moreover, in accordance with the pneumatic tire 1, the outer wall surface 32 is provided with a plurality of outward projections 33 that project outward in the tire width direction along the tire circumferential direction, and the inner wall surface 41 is provided with a plurality of inward projections 43 that project inward in the tire width direction along the tire circumferential direction. In this way, it is possible to facilitate the catching of snow in the grooves of the outer main groove 20, resulting in the enhancement of the shearing effect of snow in the groove. Consequently, it is possible to allow the outer main groove 20 extending in the tire circumferential direction to contribute to the improvement of traction performance on a snow-covered road surface.

Furthermore, in tires used with high internal pressure and high load, groove walls of grooves positioned outward in the tire width direction and extending in the tire circumferential direction are largely distorted. However, in accordance with the pneumatic tire 1 according to the present embodiment, since the outer wall surface 32 constituting the outer main groove 20 is provided with the outward projections 33 and the inner wall surface 41 is provided with the inward projections 43, it is possible to ensure rigidity of the groove walls constituting the outer main groove 20 while suppressing uneven wear.

In accordance with the pneumatic tire 1 according to the present embodiment, the interval between the inward projections 43 in the tire circumferential direction TC is smaller than the interval between the outward projections 33 in the tire circumferential direction TC. That is, since the number of the inward projections 43 formed on the inner wall surface 41 of the outer land portion 40 is larger than the number of the outward projections 33 formed on the outer wall surface 32 of the center land portion 30, the shearing effect of snow in the groove can be further enhanced as it goes outward in the tire width direction.

Furthermore, the outer main groove 20 is formed to permit see-through from one end from the other end when developing the tread over the tire circumferential direction, so that it is possible to ensure drain performance for draining water and the like on the snow-covered road surface, thereby exhibiting the traction performance more efficiently.

In vehicles such as trucks or buses, since the weight of baggage or the number of crew is changed, ground contact pressure of tires is also changed. For example, when a truck carries baggage with the maximum load capacity and when a truck carries no baggage, the shapes of ground contact surfaces of tires are different from each other. In the maximally loaded state, the ground contact surface of the tire has an approximately rectangular shape, and high ground contact pressure is applied even to the outside in the tire width direction. Meanwhile, in the case of no baggage, the ground contact surface of the tire has an approximately circular shape, and main grooves formed outward in the tire width direction may not be effectively operated.

On the other hand, in accordance with the pneumatic tire 1 according to the present embodiment, the center main groove 10 is formed to have a shape extending in the tire circumferential direction and having an amplitude in the tire width direction, so that it is possible to exhibit the shearing effect of snow even in the main grooves extending along the tire circumferential direction around the tire equator line CL. Thus, ground contact pressure is changed, so that it is possible to ensure the traction performance even when the shape of the ground contact surface of the tire is changed.

### (5) Modifications

### (5. 1) First Modification

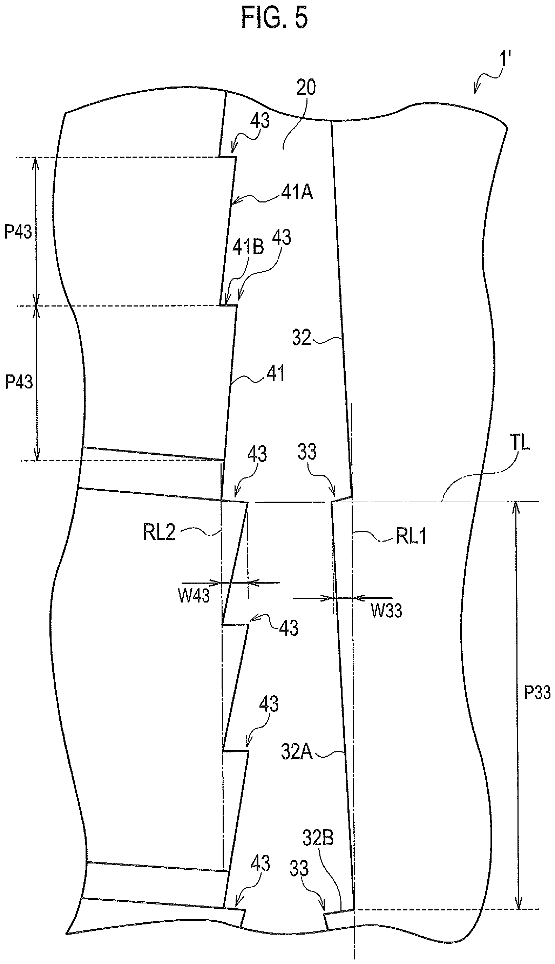

A first modification of the pneumatic tire according to the embodiment is explained with reference to drawings. Fig. 5 is an enlarged view of the outer main groove 20 in a tread pattern of a pneumatic tire 1' indicated as the first modification. In the pneumatic tire 1' illustrated in Fig. 5, the maximum width W33 of the outward projection 33 along the tire width direction is formed to be smaller than the maximum width W43 of the inward projection 43 along the tire width direction. That is, the maximum width W43 of the inward projection 43 is larger than the maximum width W33 of the outward projection 33. According to the pneumatic tire 1', it is possible to enhance the shearing effect of snow on the groove wall provided with the inward projection 43 when turning.

### (5. 2) Second Modification

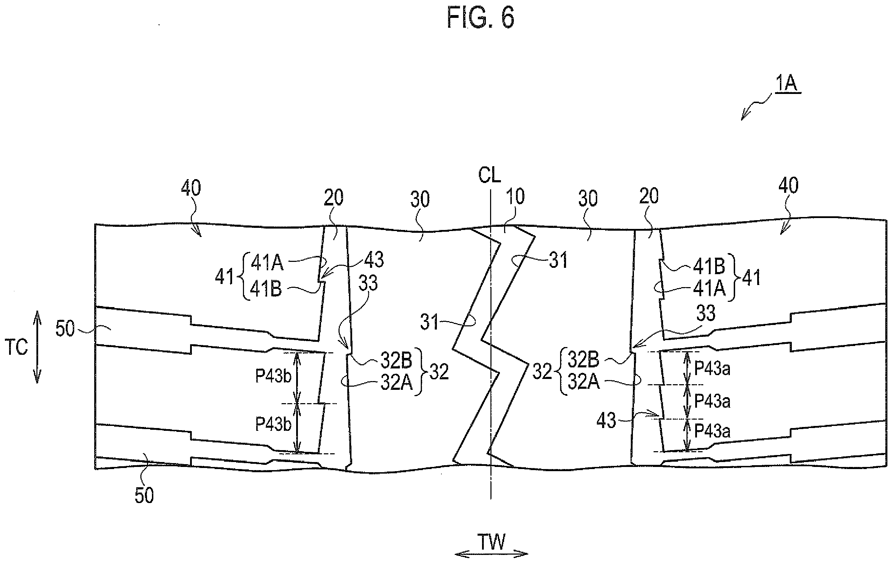

A second modification of the pneumatic tire according to the embodiment is explained with reference to drawings. Fig. 6 is a development view illustrating a tread pattern of a pneumatic tire 1A according to the modification. In addition, the same reference numerals are used to designate the same elements as those of the pneumatic tire 1 according to the aforementioned embodiment, and the description will be made by focusing on the differences.

In the embodiment, the outer main grooves 20 of the pneumatic tire 1 are formed to be line-symmetrical to each other with respect to the tire equator line CL. On the other hand, in the modification, the outer main grooves 20 of the pneumatic tire 1A are formed to be asymmetrical to each other with respect to the tire equator line CL.

Specifically, in the tire width direction, a pitch P43a (the right side of Fig. 6) of the inward projections 43 formed in the outer land portion 40 arranged at one side from the tire equator line CL is smaller than a pitch P43b (the left side of Fig. 6) of the inward projections 43 formed in the outer land portion 40 arranged at the other side from the tire equator line CL. Particularly, it is preferable that a tread pattern is formed such that the inward projections 43 (the right side of Fig. 6) with a small pitch becomes the outside of a vehicle when the tire is mounted on the vehicle.

In accordance with the pneumatic tire 1A according to the modification, the shearing effect of snow can be further enhanced as it goes outward in the tire width direction, which is positioned at the outside of the vehicle, when the tire is mounted on the vehicle.

### (5. 3) Third Modification

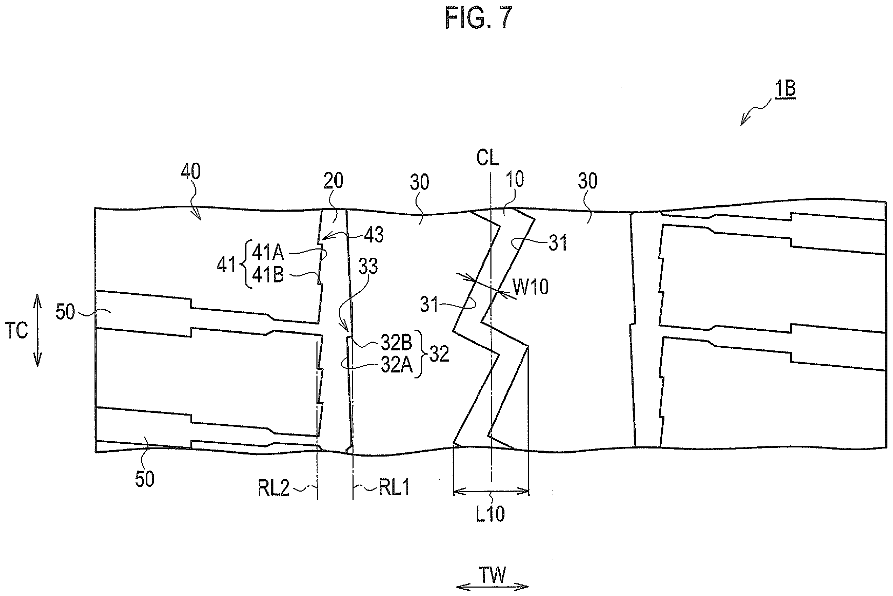

A third modification of the pneumatic tire according to the embodiment is explained with reference to drawings. Fig. 7 is a development view illustrating a tread pattern of a pneumatic tire 1B according to the modification. In addition, the same reference numerals are used to designate the same elements as those of the pneumatic tire 1 according to the aforementioned embodiment, and the description will be made by focusing on the differences.

In the embodiment, the outer main grooves 20 of the pneumatic tire 1 are formed to be line-symmetrical to each other with respect to the tire equator line CL. On the other hand, in the third modification, the outer main grooves 20 of the pneumatic tire 1B are formed to be point-symmetrical to each other with respect to the tire equator line CL.

In accordance with the pneumatic tire 1B according to the third modification, the shearing effect of snow can be further enhanced as it goes outward in the tire width direction, which is positioned at the outside of the vehicle, when the tire is mounted on the vehicle. The outer main grooves 20 of the pneumatic tire 1B are formed to be point-symmetrical to each other with respect to the tire equator line CL, so that the shearing effect of snow can be further improved outward in the tire width direction regardless of a mounting position to the vehicle.

### (5. 4) Fourth Modification

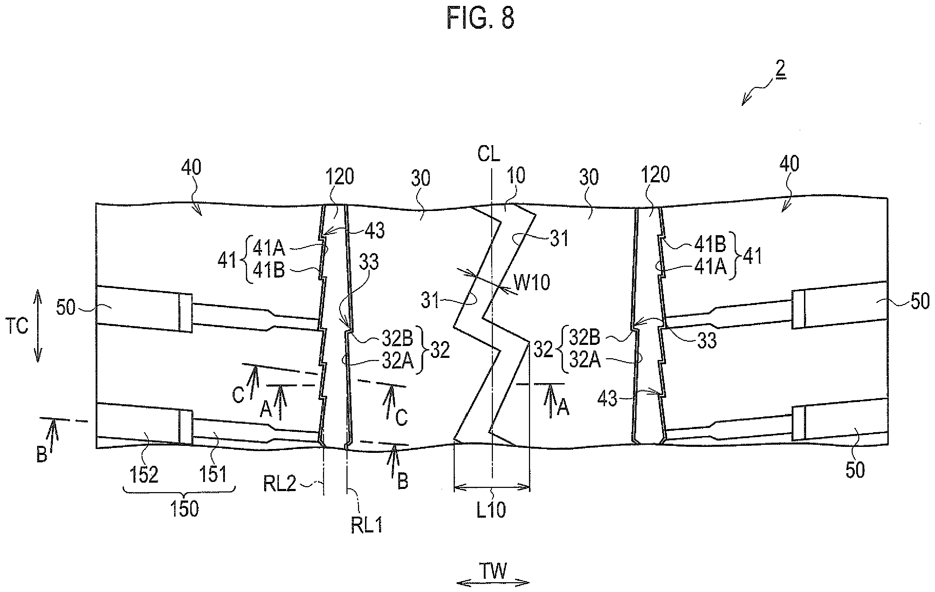

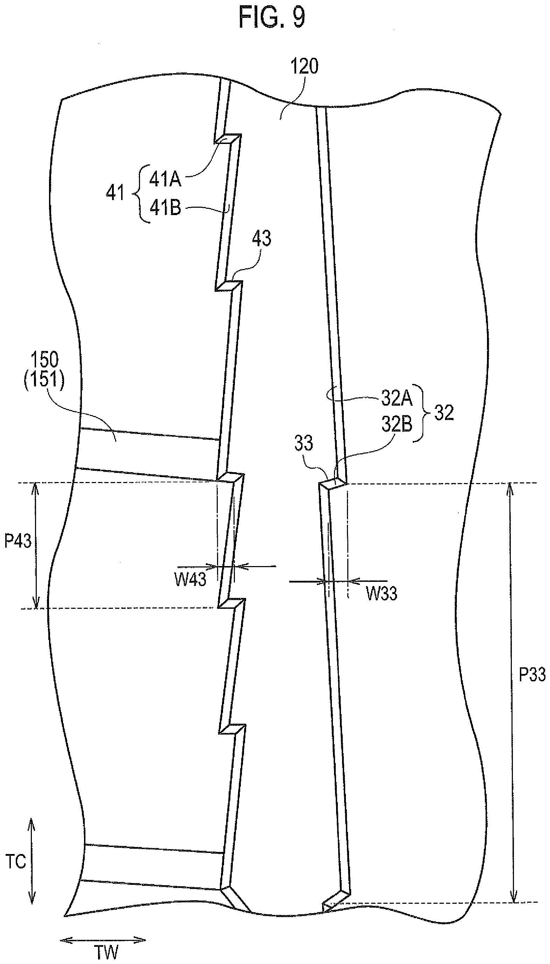

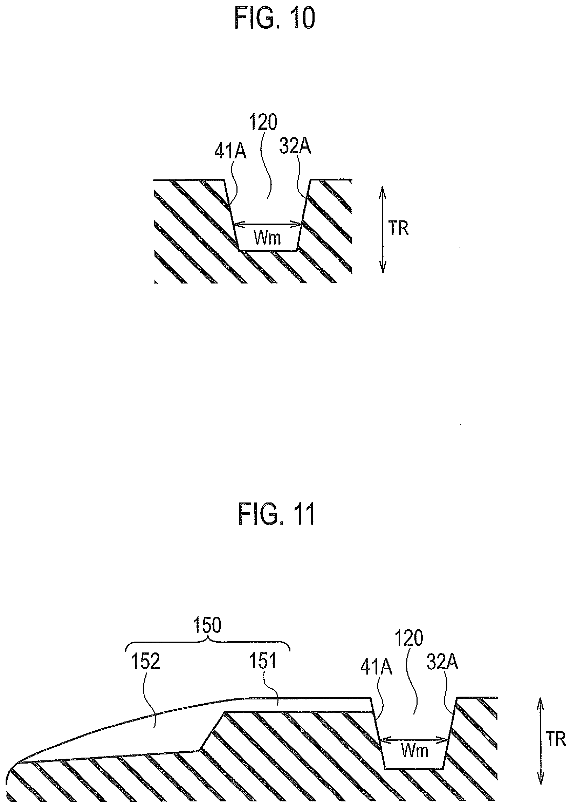

A fourth modification of the pneumatic tire according to the embodiment is explained with reference to drawings. Fig. 8 is a development view illustrating a tread pattern of a pneumatic tire 2 indicated as the fourth modification. Fig. 9 is an enlarged view of an outer main groove 120 of the pneumatic tire 2. Fig. 10 is a cross-sectional view in the tire width direction of an outer main groove 120 of the pneumatic tire 2. Fig. 11 is a cross-sectional view in the tire width direction of a lug groove 150 of the pneumatic tire 2. In the pneumatic tire 2 illustrated in Fig. 8 to Fig. 11, the same reference numerals are used to designate the same elements as those of the pneumatic tire 1, and the description will be made by focusing on the differences.

As illustrated in Fig. 10, a groove width Wm of the outer main groove 120 of the pneumatic tire 2 is reduced toward inside in the tire radial direction TR. In the outer main groove 120, a width on a bottom surface of a tread is smaller than a width of a ground contact surface thereof. Similarly to the pneumatic tire 1, the pitch P33 of the outward projection 33 along the tire circumferential direction is larger than the pitch P43 of the inward projection 43 along the tire circumferential direction. Furthermore, a maximum width W33 of the outward projection 33 along the tire width direction is equal to a maximum width W43 of the inward projection 43 along the tire width direction.

Furthermore, the outer land portion 40 of the pneumatic tire 2 is formed with the lug groove 150 opened to the outer main groove 20 while extending along the tire width direction. As illustrated in Fig. 11, the lug groove 150 has a shallow groove unit 151 having a relatively shallow groove depth toward the inside in the tire radial direction from the ground contact surface of the tread, and a deep groove unit 152 having a relatively deep groove depth. The shallow groove unit 151 has a depth shallower than that of the outer main groove 120.

In accordance with the pneumatic tire 2 according to the fourth modification, the groove width Wm of the outer main groove 120 of the pneumatic tire 2 is reduced toward the inside in the tire radial direction TR. In other words, since the center land portion 30 and the outer land portion 40 are formed such that lengths of the tire width direction are large as it goes inward in the tire radial direction in the sections of the tire width direction and the tire radial direction, the rigidity of the land portion is enhanced.

As described above, according to the pneumatic tire 2, it is possible to ensure the rigidity of the groove wall constituting the outer main groove 120, resulting in the suppression of uneven wear. Furthermore, when turning, it is possible to enhance the shearing effect of snow on the groove wall provided with the outward projection 33

### (6) Comparative Evaluations

Subsequently, in order to further clarify the effect of the present invention, comparative evaluations will be described in which pneumatic tires according to a comparative example and an example below were used. Specifically, (6. 1) Configuration of Each Pneumatic Tire and (6. 2) Evaluation Result will be described with reference to Table 1 below.

### (6. 1) Configuration of Each Pneumatic Tire

After pneumatic tires according to first to third comparative examples and first to fourth examples are prepared, traction performance and wear resistance performance were measured under the following conditions:
- Size of Tires: 235/65R16C 115/113R
- Internal Pressure Condition: 475 kPa
- Load Condition: Proper Load

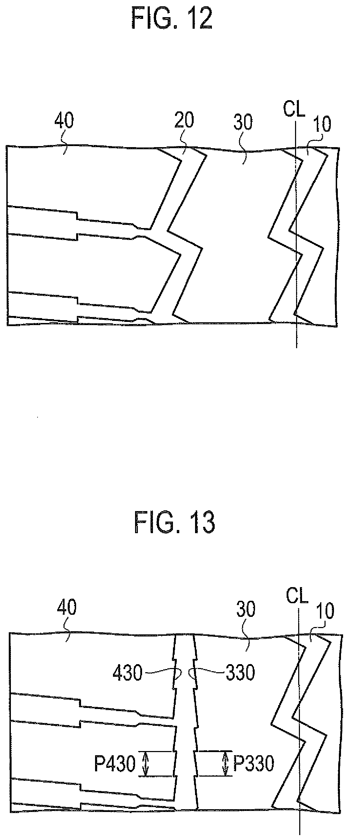

Fig. 12 is a development view illustrating a tread pattern of a pneumatic tire of the first comparative example. In the pneumatic tire of the first comparative example, an outer main groove is formed to have a zigzag shape other than a wedge shape, and a pitch between apexes of outward projections formed on an inner wall surface in the tire width direction of the outer main groove and a pitch between apexes of inward projections formed on an outer wall surface in the tire width direction of the outer main groove are formed at a regular interval. Furthermore, a length from virtual line RL1 to the apex of the outward projection in the tire width direction and a length from virtual line RL2 to the apex of the inward projection in the tire width direction are formed to be equal to each other.

Fig. 13 is a development view illustrating a tread pattern of a pneumatic tire of the second comparative example. In the pneumatic tire of the second comparative example, a wedge-shaped part, in which an interval between groove walls of an outer main groove is reduced toward one side of the tire circumferential direction, is repeated in the tire circumferential direction, and a pitch between apexes of outward projections formed on an inner wall surface in the tire width direction of the outer main groove and a pitch between apexes of inward projections formed on an outer wall surface in the tire width direction of the outer main groove are formed at a regular interval. Furthermore, a length from virtual line RL1 to the apex of the outward projection in the tire width direction and a length from virtual line RL2 to the apex of the inward projection in the tire width direction are formed to be equal to each other.

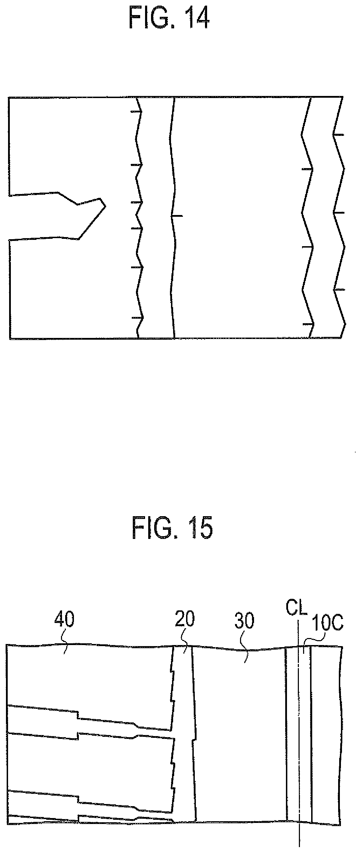

Fig. 14 is a development view illustrating a tread pattern of a pneumatic tire of the third comparative example. The pneumatic tire of the third comparative example is a tire disclosed in Japanese Unexamined Patent Application Publication No. H06-286421 described as Patent Literature 2. In the pneumatic tire of the third comparative example, an outer main groove is formed to have a zigzag shape other than a wedge shape, and a pitch between apexes of outward projections formed on an inner wall surface in the tire width direction of the outer main groove is longer than a pitch between apexes of inward projections formed on an outer wall surface in the tire width direction of the outer main groove. A length from virtual line RL1 to the apex of the outward projection in the tire width direction and a length from virtual line RL2 to the apex of the inward projection in the tire width direction are formed to be equal to each other.

Fig. 15 is a development view illustrating a tread pattern of the pneumatic tire of the first example. In the pneumatic tire of the first example, a wedge-shaped part, in which an interval between groove walls of an outer main groove is reduced toward one side of the tire circumferential direction, is repeated in the tire circumferential direction. Groove walls of a center main groove are straightly formed along the tire circumferential direction.

A pitch between apexes of outward projections formed on an inner wall surface in the tire width direction of the outer main groove is longer than a pitch between apexes of inward projections formed on an outer wall surface in the tire width direction of the outer main groove. A length L1 from virtual line RL1 to the apex of the outward projection in the tire width direction and a length L2 from virtual line RL2 to the apex of the inward projection in the tire width direction are formed to be equal to each other.

The pneumatic tire of the second example is the pneumatic tire illustrated in Fig. 1. In the pneumatic tire of the second example, the wedge-shaped part, in which an interval between groove walls of the outer main groove is reduced toward one side of the tire circumferential direction, is repeated in the tire circumferential direction, and a pitch between apexes of the outward projections formed on an inner wall surface in the tire width direction of the outer main groove is longer than a pitch between apexes of the inward projections formed on an outer wall surface in the tire width direction of the outer main groove, and the maximum width W33 of the outward projection 33 along the tire width direction is formed to be equal to the maximum width W43 of the inward projection 43 along the tire width direction.

The pneumatic tire of the third example is the pneumatic tire illustrated in Fig. 5. That is, a pitch between apexes of the outward projections formed on an inner wall surface in the tire width direction of the outer main groove is longer than a pitch between apexes of the inward projections formed on an outer wall surface in the tire width direction of the outer main groove, and the maximum width W33 of the outward projection 33 along the tire width direction is formed to be smaller than the maximum width W43 of the inward projection 43 along the tire width direction.

The pneumatic tire of the fourth example is the pneumatic tire illustrated in Fig. 8. That is, a pitch between apexes of the outward projections formed on an inner wall surface in the tire width direction of the outer main groove is longer than a pitch between apexes of the inward projections formed on an outer wall surface in the tire width direction of the outer main groove, and the maximum width W33 of the outward projection 33 along the tire width direction is formed to be equal to the maximum width W43 of the inward projection 43 along the tire width direction.

**[Table 1]**

| | | Comparative Example 1 | Comparative Example 2 | Comparative Example 3 | Example 1 | Example 2 | Example 3 | Example 4 |
|---|---|---|---|---|---|---|---|---|
| Pitch between projections formed in outermost main groove | | in=out | in=out | in>out | in>out | in>out | in>out | in>out |
| Length of inward projection (out) Length of outward projection (in) | | in=out | in=out | in=out | in=out | in=out | in<out | in=out |
| Wedge shaped portion | | Not provided | Provided | Not provided | Provided | Provided | Provided | Provided |
| Traction performance index | | 110 | 107 | 101 | 100 | 106 | 109 | 107 |
| Wear resistance performance | Step difference of heel & toe wear (mm) | 2.1 | 0.2 | 0.3 | 0.3 | 0.2 | 0.5 | 0.1 |
| | Step difference of river wear of outer wall surface of central land unit (mm) | 0.9 | 1.8 | 2.1 | 0.2 | 0.1 | 0.2 | 0 |

In Table 1 above, "in" represents a projection formed on an inner wall surface in the tire width direction of the outermost main groove, and "out" represents a projection formed on an outer wall surface in the tire width direction of the outermost main groove.

### (6. 2) Evaluation Results

Subsequently, evaluation results obtained by performing tests using the aforementioned pneumatic tires will be described with reference to table 1 above.

### (6. 2. 1) Traction Performance Test

After a turntable used to resemble a snow-covered road is rotated using a test drum mounted with each pneumatic tire, the friction coefficients and the slip ratios of the pneumatic tires were measured. The friction coefficient µ and the slip ratio of the pneumatic tire of the first example are set to 100, and the friction coefficients µ and the slip ratios of the other pneumatic tires were indexed. In addition, the greater the value of the index is, the superior the traction performance is.

As a consequence, as illustrated in Table 1 above, the pneumatic tires according to the first to third comparative examples and second to fourth examples were determined to have superior traction performance, as compared with the pneumatic tire according to the first example.

### (6. 2. 2) Uneven Wear Resistance Performance Test

After the test drum mounted with each pneumatic tire is rotated by substantially 10,000 km, step difference of heel and toe wear (tire circumferential direction) at the outer land portion of each pneumatic tire and step difference of river wear (tire width direction) at the outer land portion were measured. In addition, the greater the numerical value is, the greater the step difference is.

The degree of wear was determined by visual observation of an observer. When the step difference due to wear after running the distance exceeds 1 mm, the tire was determined to be improper.

### (6. 2. 3) Conclusion

From the results of the traction performance test and the uneven wear resistance performance test, the pneumatic tires according to the first to fourth examples were determined to satisfy both the traction and the wear resistance performance. As described above, the pneumatic tires according to the examples were determined to allow the traction performance and the uneven wear resistance performance to be compatible with each other at a high level, as compared with the pneumatic tires according to the first to third comparative examples.

### (7) Other embodiments

As described above, although the content of the present invention was disclosed through the embodiments of the present invention, the descriptions and drawings that form a part of this disclosure are not to be considered as limitation to the present invention. From this disclosure, a variety of alternate embodiments, examples, and applicable techniques will become apparent to one skilled in the art.

For example, the embodiment of the present invention can be modified as follows. Specifically, the tire may be a tire which is filled with air, nitrogen gas and the like, or a solid tire which is not filled with air, nitrogen gas and the like. Furthermore, as the tire, it may not always be the pneumatic tire, and it may be a tire mounted on a vehicle such as a car.

In an embodiment not covered by the claims, the outward projection 33 and the inward projection 43 may not always have a triangular shape in view of a tread surface. For example, the outward projection 33 and the inward projection 43 may have a rectangular shape.

As described above, it is of course that the present invention is to be defined only by the claims.

## Claims

1. A tire comprising: a plurality of main grooves (10, 20) which extend in a tire circumferential direction; and land portions (30, 40) which are segmented by the main grooves, wherein
an outermost main groove (20) formed at an outermost side in a tire width direction among the plurality of main grooves includes a first groove wall (32) inward in the tire width direction; and a second groove wall (41) outward in the tire width direction,
the outermost main groove (20) has a wedge-shaped part in which an interval between the first groove wall (32) and the second groove wall (41) is reduced toward one side of the tire circumferential direction, the wedge-shaped part being repeated in the tire circumferential direction,
the first groove wall (32) has a plurality of first projections (33) with apexes that project outward in the tire width direction, along the tire circumferential direction,
the second groove wall (41) has a plurality of second projections (43) with apexes that project inward in the tire width direction, along the tire circumferential direction, and
an interval between the apexes of the first projections (33) adjacent to each other in the tire circumferential direction is larger than an interval between the apexes of the second projections (43) adjacent to each other in the tire circumferential direction, wherein
the first projections (33) have first inclined wall surfaces (32A) and first connection wall surfaces (32B) and are formed that the first inclined wall surfaces (32A) and the first connection wall surfaces (32B) are alternately continued in the tire circumferential direction,
the first inclined wall surfaces (32A) are provided along the tire circumferential direction at a regular interval and inclined with respect to the tire circumferential direction,
the second projections (43) have second inclined wall surfaces (41A) and second connection wall surfaces (41B) and are formed that the second inclined wall surfaces (41A) and the second connection wall surfaces (41B) are alternately continued in the tire circumferential direction, the second inclined wall surfaces (41A) are provided along the tire circumferential direction at a regular interval and inclined with respect to a virtual line along the tire circumferential direction, and wherein
a length in the tire circumferential direction of each first inclined wall surface (32A) is longer than a length in the tire circumferential direction of each first connection wall surface (32B), and
a length in the tire circumferential direction of each second inclined wall surface (41A) is longer than a length in the tire circumferential direction of each second connection wall surface (41B), **characterized in that**
each first connection wall surface (32B) connects end portions of the first inclined wall surfaces (32A) adjacent to each other in the tire circumferential direction, and
each second connection wall surface (41B) connects end portions of the second inclined wall surfaces (41A) adjacent to each other in the tire circumferential direction.

2. The tire according to claim 1, wherein
the interval between the apexes of the first projections (33) adjacent to each other in the tire circumferential direction is constant, and the interval between the apexes of the second projections (43) adjacent to each other in the tire circumferential direction is constant.

3. The tire according to claim 1 or 2, wherein
a virtual line, which connects the apex of a first projection (33) to the apex of a second projection (43) facing the apex of the first projection (33), coincides with a tire width direction line perpendicular to a tire equator line.

4. The tire according to any one of claims 1 to 3, wherein
a tire-width-direction length to the apex of a first projection (33) from a virtual line, which is defined along the tire circumferential direction at a position coinciding with the first groove wall (32) at which a groove width in the tire width direction of the outermost main groove (20) is widest, is shorter than a tire-width-direction length to the apex of a second projection (43) from a virtual line which is defined along the tire circumferential direction at a position coinciding with the second groove wall (41) at which a groove width in the tire width direction of the outermost main groove (20) is widest.

5. The tire according to any one of claims 1 to 4, wherein a groove width of the outermost main groove (20) is reduced toward inside in a tire radial direction.

6. The tire according to any one of claims 1 to 5, wherein
a center main groove (10) formed in an area including the tire equator line has an amplitude in the tire width direction while extending in the tire circumferential direction.

## Patentansprüche

1. Reifen, Folgendes beinhaltend: eine Vielzahl von Hauptrillen (10, 20), welche sich in eine Reifenumfangsrichtung erstrecken; und Stegabschnitte (30, 40), welche durch die Hauptrillen segmentiert werden, wobei
eine äußerste Hauptrille (20), welche an einer äußersten Seite in einer Reifenbreitenrichtung unter der Vielzahl von Hauptrillen gebildet ist, eine erste Rillenwand (32) einwärts in der Reifenbreitenrichtung beinhaltet; und eine zweite Rillenwand (41) auswärts in der Reifenbreitenrichtung beinhaltet,
die äußerste Hauptrille (20) einen keilförmigen Teil besitzt, in welchem ein Intervall zwischen der ersten Rillenwand (32) und der zweiten Rillenwand (41) in Richtung einer Seite der Reifenumfangsrichtung reduziert ist, wobei sich der keilförmige Teil in der Reifenumfangsrichtung wiederholt,
die erste Rillenwand (32) eine Vielzahl von ersten Vorsprüngen (33) mit Spitzen besitzt, welche auswärts in der Reifenbreitenrichtung entlang der Reifenumfangsrichtung vorspringen,
die zweite Rillenwand (41) eine Vielzahl von zweiten Vorsprüngen (43) mit Spitzen besitzt, welche einwärts in der Reifenbreitenrichtung entlang der Reifenumfangsrichtung vorspringen, und
ein Intervall zwischen den Spitzen der ersten Vorsprünge (33), welche in der Reifenumfangsrichtung aneinander grenzen, größer ist als ein Intervall zwischen den Spitzen der zweiten Vorsprünge (43), welche in der Reifenumfangsrichtung aneinander grenzen, wobei
die ersten Vorsprünge (33) erste geneigte Wandflächen (32A) und erste Verbindungswandflächen (32B) besitzen und so gebildet sind, dass die ersten geneigten Wandflächen (32A) und die ersten Verbindungswandflächen (32B) im Wechsel in der Reifenumfangsrichtung durchgängig sind,
die ersten geneigten Wandflächen (32A) entlang der Reifenumfangsrichtung in einem regelmäßigen Intervall bereitgestellt sind und in Bezug auf die Reifenumfangsrichtung geneigt sind,
die zweiten Vorsprünge (43) zweite geneigte Wandflächen (41A) und zweite Verbindungswandflächen (41B) besitzen und so gebildet sind, dass die zweiten geneigten Wandflächen (41A) und die zweiten Verbindungswandflächen (41B) im Wechsel in der Reifenumfangsrichtung durchgängig sind, wobei die zweiten geneigten Wandflächen (41A) entlang der Reifenumfangsrichtung in einem regelmäßigen Intervall bereitgestellt sind und in Bezug auf eine virtuelle Linie entlang der Reifenumfangsrichtung geneigt sind, und wobei
eine Länge in der Reifenumfangsrichtung einer jeden ersten geneigten Wandfläche (32A) länger als eine Länge in der Reifenumfangsrichtung einer jeden ersten Verbindungswandfläche (32B) ist, und
eine Länge in der Reifenumfangsrichtung einer jeden zweiten geneigten Wandfläche (41A) länger als eine Länge in der Reifenumfangsrichtung einer jeden zweiten Verbindungswandfläche (41B) ist, **dadurch gekennzeichnet, dass**
jede erste Verbindungswandfläche (32B) sich mit Endabschnitten der ersten geneigten Wandflächen (32A) verbindet, welche in der Reifenumfangsrichtung aneinander grenzen, und
jede zweite Verbindungswandfläche (41B) sich mit Endabschnitten der zweiten geneigten Wandflächen (41A) verbindet, welche in der Reifenumfangsrichtung aneinander grenzen.

2. Reifen nach Anspruch 1, bei welchem der Intervall zwischen den Spitzen der ersten Vorsprünge (33), welche in der Reifenumfangsrichtung aneinander grenzen, konstant ist, und der Intervall zwischen den Spitzen der zweiten Vorsprünge (43), welche in der Reifenumfangsrichtung aneinander grenzen, konstant ist.

3. Reifen nach Anspruch 1 oder 2, bei welchem eine virtuelle Linie, welche die Spitze eines ersten Vorsprungs (33) mit der Spitze eines zweiten Vorsprungs (43) verbindet, welcher der Spitze des ersten Vorsprungs (33) zugewandt ist, mit einer Reifenbreitenrichtungslinie übereinstimmt, welche rechtwinklig zu einer Reifenäquatorlinie ist.

4. Reifen nach einem der Ansprüche 1 bis 3, bei welchem eine Reifenbreitenrichtungslänge zur Spitze eines ersten Vorsprungs (33) von einer virtuellen Linie, welche entlang der Reifenumfangsrichtung an einer Position definiert ist, welche mit der ersten Rillenwand (32) übereinstimmt, an welcher eine Rillenbreite in der Reifenbreitenrichtung der äußersten Hauptrille (20) am breitesten ist, kürzer ist als eine Reifenbreitenrichtungslänge zur Spitze eines zweiten Vorsprungs (43) von einer virtuellen Linie, welche entlang der Reifenumfangsrichtung an einer Position definiert ist, welche mit der zweiten Rillenwand (41) übereinstimmt, an welcher eine Rillenbreite in der Reifenbreitenrichtung der äußersten Hauptrille (20) am breitesten ist.

5. Reifen nach einem der Ansprüche 1 bis 4, bei welchem eine Rillenbreite der äußersten Hauptrille (20) in Richtung einwärts in einer Reifenradialrichtung reduziert ist.

6. Reifen nach einem der Ansprüche 1 bis 5, bei welchem eine mittlere Hauptrille (10), welche in einem Bereich gebildet ist, welcher die Reifenäquatorlinie enthält, eine Amplitude in der Reifenbreitenrichtung besitzt, während sie sich in die Reifenumfangsrichtung erstreckt.

## Revendications

1. Pneu comprenant une pluralité de rainures principales (10, 20) qui s'étendent dans une direction circonférentielle du pneu et des parties en relief (30, 40) qui sont segmentées par les rainures principales, dans lequel
une rainure principale le plus à l'extérieur (20) formée au niveau d'un côté le plus à l'extérieur dans le sens de la largeur du pneu parmi la pluralité des rainures principales comprend une première paroi de rainure (32) à l'intérieur dans le sens de la largeur du pneu et une seconde paroi de rainure (41) à l'extérieur dans le sens de la largeur du pneu,
la rainure principale le plus à l'extérieur (20) comporte une partie en forme de biseau dans laquelle un intervalle entre la première paroi de rainure (32) et la seconde paroi de rainure (41) est réduit vers un côté de la direction circonférentielle du pneu, la partie en forme de biseau étant répétée dans la direction circonférentielle du pneu,
la première paroi de rainure (32) comporte une pluralité de premières saillies (33) ayant des sommets qui se projettent vers l'extérieur dans le sens de la largeur du pneu, le long de la direction circonférentielle du pneu,
la seconde paroi de rainure (41) comporte une pluralité de secondes saillies (43) ayant des sommets qui se projettent vers l'intérieur dans le sens de la largeur du pneu, le long de la direction circonférentielle du pneu, et
l'intervalle entre les sommets des premières saillies (33) adjacentes dans la direction circonférentielle du pneu est plus grand que l'intervalle entre les sommets des secondes saillies (43) adjacentes dans la direction circonférentielle du pneu, et dans lequel
les premières saillies (33) comportent des premières surfaces de paroi inclinée (32A) et des premières surfaces de paroi de raccord (32B) et sont formées de telle manière que les premières surfaces de paroi inclinée (32A) et les premières surfaces de paroi de raccord (32B) se suivent alternativement de façon ininterrompue dans la direction circonférentielle du pneu,
les premières surfaces de paroi inclinée (32A) sont agencées le long de la direction circonférentielle du pneu à un intervalle régulier et inclinées par rapport à la direction circonférentielle du pneu,
les secondes saillies (43) comportent des secondes surfaces de paroi inclinée (41A) et des secondes surfaces de paroi de raccord (41B) et sont formées de telle sorte que les secondes surfaces de paroi inclinée (41A) et les secondes surfaces de paroi de raccord (41B) se suivent alternativement de façon ininterrompue dans la direction circonférentielle du pneu, les secondes surfaces de paroi inclinée (41A) étant agencées le long de la direction circonférentielle du pneu à un intervalle régulier et inclinées par rapport à une ligne virtuelle le long de la direction circonférentielle du pneu, et
la longueur dans la direction circonférentielle du pneu de chaque première surface de paroi inclinée (32A) est supérieure à la longueur dans la direction circonférentielle du pneu de chaque première surface de paroi de raccord (32B), et
la longueur dans la direction circonférentielle du pneu de chaque seconde surface de paroi inclinée (41A) est supérieure à la longueur dans la direction circonférentielle du pneu de chaque seconde surface de paroi de raccord (41B),
**caractérisé en ce que**
chaque première surface de paroi de raccord (32B) raccorde des parties d'extrémité des premières surfaces de paroi inclinée (32A) adjacentes l'une à l'autre dans la direction circonférentielle du pneu, et
chaque seconde surface de paroi de raccord (41B) raccorde des parties d'extrémité des secondes surfaces de paroi inclinée (41A) adjacentes l'une à l'autre dans la direction circonférentielle du pneu.

2. Pneu selon la revendication 1, dans lequel l'intervalle entre les sommets des premières saillies (33) adjacentes dans la direction circonférentielle du pneu est constant, et l'intervalle entre les sommets des secondes saillies (43) adjacentes dans la direction circonférentielle du pneu est constant.

3. Pneu selon la revendication 1 ou 2, dans lequel une ligne virtuelle qui relie le sommet d'une première saillie (33) au sommet d'une seconde saillie (43) faisant face au sommet de la première saillie (33) coïncide avec une ligne dans le sens de la largeur du pneu perpendiculaire à la ligne d'équateur du pneu.

4. Pneu selon l'une quelconque des revendications 1 à 3, dans lequel la distance, dans le sens de la largeur du pneu, du sommet d'une première saillie (33) à une ligne virtuelle définie le long de la direction circonférentielle du pneu à une position coïncidant à la première paroi de rainure (32) au niveau de laquelle la largeur de la rainure principale le plus à l'extérieur (20) dans le sens de la largeur du pneu est la plus large est plus courte que la distance, dans le sens de la largeur du pneu, du sommet d'une seconde saillie (43) à une ligne virtuelle définie le long de la direction circonférentielle du pneu à une position coïncidant à la seconde paroi de rainure (41) au niveau de laquelle la largeur de la rainure principale le plus à l'extérieur (20) dans le sens de la largeur du pneu est la plus large.

5. Pneu selon l'une quelconque des revendications 1 à 4, dans lequel la largeur de rainure de la rainure principale le plus à l'extérieur (20) est réduite vers l'intérieur dans le sens radial du pneu.

6. Pneu selon l'une quelconque des revendications 1 à 5, dans lequel une rainure principale centrale (10) formée dans une zone incluant la ligne d'équateur du pneu possède une amplitude dans le sens de la largeur du pneu en s'étendant dans la direction circonférentielle du pneu.
